Europäisches Patentamt

European Patent Office

Office européen des brevets

(11) Publication number: **0 166 008**
**B1**

# (12) EUROPEAN PATENT SPECIFICATION

(45) Date of publication of patent specification: **08.03.89**

(51) Int. Cl.⁴: **F 16 H 1/22, B 30 B 11/24**

(21) Application number: **84107096.4**

(22) Date of filing: **20.06.84**

(54) **High torque drive means for two very closes shafts which are also subjected to strong axial thrusts and application thereof to a double screw extruder.**

(43) Date of publication of application:
**02.01.86 Bulletin 86/01**

(45) Publication of the grant of the patent:
**08.03.89 Bulletin 89/10**

(84) Designated Contracting States:
**AT CH DE FR GB LI SE**

(56) References cited:
**EP-A-0 118 358**
**EP-A-0 119 324**
**DE-A-2 142 825**
**FR-A-2 437 532**
**US-A-2 466 934**
**US-A-3 824 875**
**US-A-3 894 725**

(73) Proprietor: **BAUSANO & FIGLI S.p.A.**
**C.so Indipendenza, 111**
**I-10086 Rivarolo Canavese (Torino) (IT)**

(72) Inventor: **de Bernardi, Stefano**
**Via Venezia, 9**
**I-21052 Busto Arsizio (Varese) (IT)**

(74) Representative: **Dr. Ing. A. Racheli & C.**
**Viale San Michele del Carso, 4**
**I-20144 Milano (IT)**

Courier Press, Leamington Spa, England.

## Description

This invention relates to drive means capable of moving a set of two shafts arranged at a close distance from each other, either parallely or with converging axes, being said shafts subjected to strong axial thrusts. These shafts are used, for example, in a double screw extruder for plastic materials.

In the case of two adjacent shafts moving in opposite direction to each other, the simplest way for rotating them is to transmit the entire torque of the motor only to one of the two shafts, and then impart a rotation to the second shaft by a pair of identical gears, each one keyed to each of the two shafts, such as to mesh with the other gear. On the other hand, when the shafts rotate in a same direction, the rotation imparted to the first shaft, always by a single motor, is transmitted to the second shaft by means of an intermediate gear.

However, in these embodiments, the high speed of rotation of the shaft leads to a severe wear and to a very short life of the plasticizing screws. On the other hand a low speed would cause high torques and accordingly occasional breakages. Moreover, being the shaft distance very small, the gears must have very small pitch diameters.

In the late few years, two ways have been followed to overcome this drawback.

The first way consists in making shafts carrying conical extruding screws, so that at some distance from the cone apex the gears may have larger dimensions. However, this complicates the whole construction.

A second approach was to separate the shaft actuation providing a reduction unit with two outlets each of which imparts the movement to the free end of each shaft, that is to the end opposite to the one carrying the screw. The disadvantage of this system is that the two very close shafts, subjected to a strong torsion become very long in order to leave along their axis the necessary space for the housing of the thrust bearings. These are usually positioned in such a way that each thrust bearing of a shaft is offset with respect to thrust bearing of the other. Therefore, this solution is still not acceptable, because the shafts, for resisting the torsional stress, must greatly increase their diameters.

Attempts were also made to increase the gear sturdiness by lengthening the latter or increasing their number. However, this also considerably adds to costs.

EP—A—0 119 324 — published after the filing date of the instant application — describes an apparatus rotationally driving two closely space shafts of a double screw extruder comprising: at least four independent drive units for driving said shafts; a driven gear on each shaft which is driven by at least two of said drive units; a synchronizing means for constraining each of said two closely spaced shafts to rotate at the same speed in one or the other direction. It foresees the application to only parallel shafts on which cylindrical gears are mounted.

Therefore, it is the object of the present invention to provide a structurally economical solution to the problem of driving two close converging shafts arranged at a close distance from each other which are also subjected to strong axial thrusts.

According to the present invention, the above object has been achieved as specified in claim 1 and 5.

Other advantageous solutions have been specified in the subsequent claims 2—4.

The invention will now be explained by an exemplary embodiment as shown in the accompanying drawings, in which:

Fig. 1 is a schematic perspective view of a drive means according to the present invention, in which the two shafts rotate in opposite direction;

Fig. 2 is a schematic side view of the same drive means, in which also one of the two extruding screws is shown; and

Fig. 3 is a schematic perspective view of another embodiment, in which the two shafts are caused to rotate in the same direction.

Figs. 4 and 5 are views of two further embodiments obtained on the converging shafts.

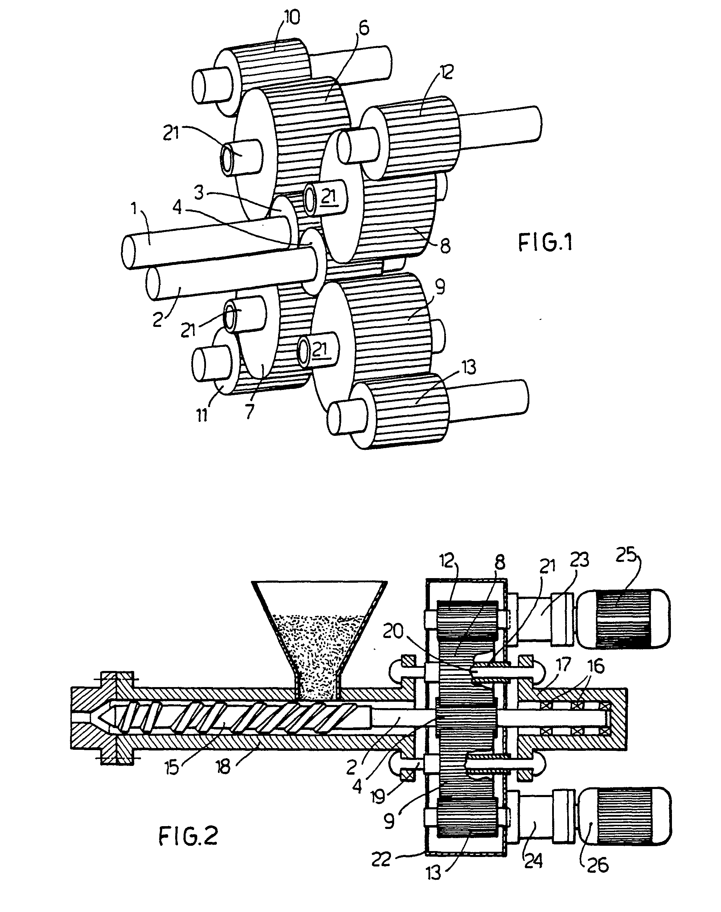

Referring first to Fig. 1, it will be seen that reference numerals 1 and 2 denote the two synchronized parallel counter-rotating shafts, which are arranged at a very close distance from each other. Meshing gears 3 and 4, are mounted on each of the shafts. According to the present invention, rotation is imparted to each of such gears 3 and 4 at least by means of two drive members. Two torques act upon gear 3 by means of gears 6 and 7, which are located in suitable zones on the circumference of gears 3, to limit the resulting thrust on said gear 3. Gear 4 is driven by two further drive members terminating with gears 8 and 9, respectively. In the particular embodiment of Fig. 1, the drive members are gears driven by other gears 10, 11, 12 and 13, respectively, which in turn are driven by independent motors.

This solution allows a reduced dimensioning of the length of gears 3 and 4 since the latter, serving only for synchronization of the two shafts, do not transmit the full power. Moreover, a good power division division is obtained for the power supplied to each of the gears, as each torque is applied to the respective gear 3 or 4 at spaced apart peripheral zones such as to minimize stresses.

Referring now to Fig. 2, in which an extruder has been schematically shown, it will be seen that the screws 15 have been formed on the shafts 1 and 2, although only one screw is shown in Fig. 2. The four gears 10, 11, 12 and 13 (of which only two are shown in Fig. 2) are connected to epicyclical reduction units 23 and 24, which are driven by motors 25 and 26, respectively.

The shafts 1 and 2 must be supported by a series of axial thrust bearings 16, the strain of which has to be supported by the support 17. The axial strain caused by the extrusion pressure of the plastic material has to be supported by the housing 18 containing the extruder screws 15. According to the invention, it is provided that said housing 18 and support 17 are directly connected to each other, for example by tie rods 19 and 20 which conveniently are caused to pass through hollow shafts 21 carrying the gears 6, 7, 8 and 9. Thus, the drive box 22, the containing the gears 3 to 13, is released of any stress due to these considerable strains.

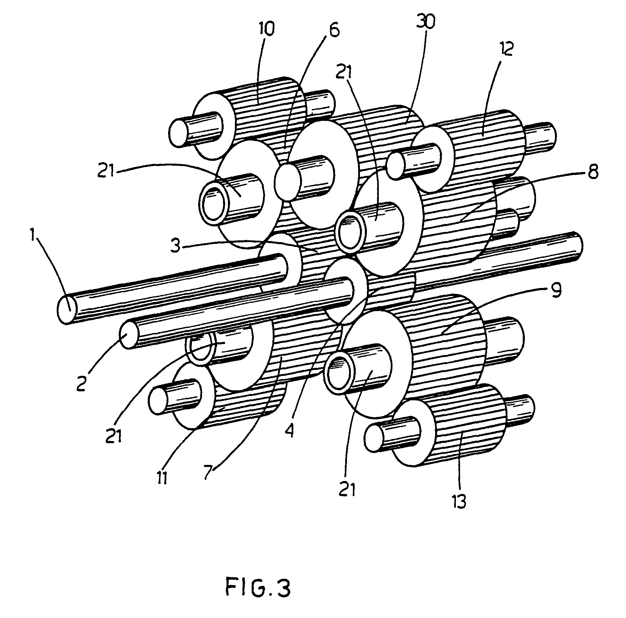

Referring now to Fig. 3, it will be seen that also therein the same reference numerals 1 and 2 are used to indicate two synchronized parallel shafts which rotate in a same direction and are arranged at a very close distance. Each of the shafts has gears 3 and 4 mounted thereon, but not meshing with each other. As for the embodiment of Fig. 1, it is provided that motion is given to each of said gear 3 and 4 at least by means of two drive members. Two torques are caused to act upon gear 3 by means of gear 6 and gear 7, which will be arranged in suitable zones on the circumference of gear 3 to limit the resulting thrust on said gear 3. Gear 4 is driven by two further drive members terminating with gears 8 and 9, respectively. Also in this case, the drive members are gears driven by further gears 10, 11, 12 and 13, respectively, which in turn are driven by independent motors.

In this case, synchronism between said shafts 1 and 2 is provided by gear 30 meshing with gears 6 and 8 forming part of the drive members operating the two gears 3 and 4, respectively. Also in this case, the dimensioning of gears 3 and 4 is much reduced, since such gears serve only to transmit the power share assigned thereto.

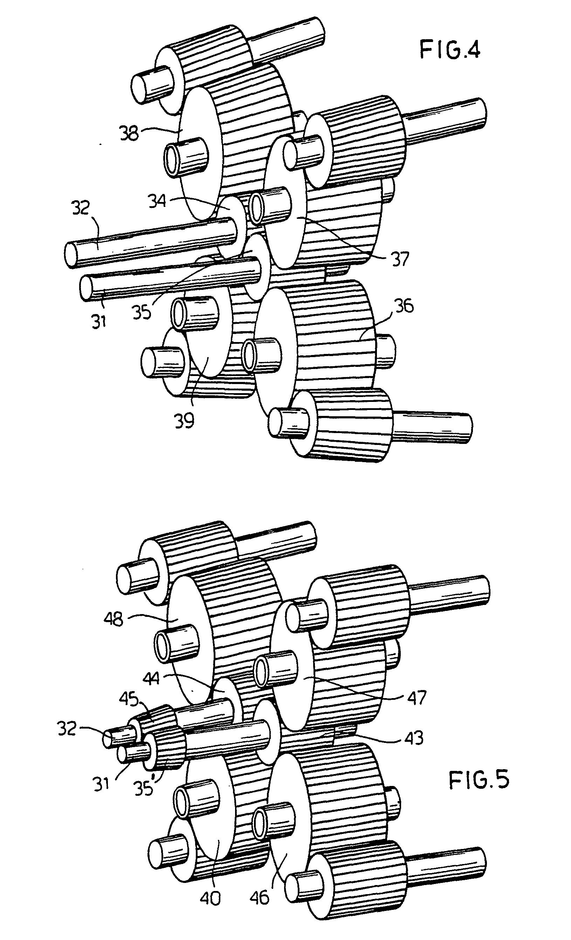

Fig. 4 shows two converging shafts 31 and 32 on which two conical gears 35 and 34 respectively are mounted meshing with each other. On each of these, two drive members act, by means of gears 36, 37, 38, 39, also conical.

In Fig. 5 a further embodiment is shown in which the converging shafts 31 and 32 are each provided with a cylindrical gear 43 and 44, not meshing one with the other, and with meshing synchronization conical gears 35' and 45. The gears 43 and 44 are each driven by driving members which act by means of their final gear 46, 47, 48, 40. In this case the driving means can be all carried out with cylindrical gears.

## Claims

1. An apparatus rotationally driving two closely spaced shafts (31, 32) of a double screw extruder comprising:
— at least four independent drive units for driving said shafts (31, 32);
— a driven gear (34, 35) on each shaft (31, 32) which is driven by at least two of said driven units;
— a synchronizing means (34, 35, 30) for constraining each of said two closely spaced shafts (31, 32) to rotate at the same speed in one or the other direction characterised in that the shafts (31, 32) are convergent and on each of them the driven gear is conical (34, 35).

2. An apparatus as claimed in claim 1, characterized in that the drive units comprise epicyclical reduction units (23, 24).

3. An apparatus as claimed in claim 1, characterized in that the synchronizing means are the same driven gears (34, 35) meshing with each other.

4. An apparatus as claimed in claim 1, characterized in that the driving gear (6) of one drive unit operating the driven gear (3) meshes with an idler gear (30) which also meshes with the driving gear (8) of a drive unit operating the other driven gear (4).

5. An apparatus rotationally driving two closely spaced shafts (31, 32) of a double screw extruder comprising:
— at least four independent drive unts for driving said shafts (31, 32);
— a driven gear (43, 44) on each shaft (31, 32) which is driven by at least two of said drive units;
— a synchronizing means (35', 45) for constraining each of said two closely spaced shafts (31, 32) to rotate at the same speed in one or the other direction characterised in that the shafts (31, 32) are convergent and on each of them the synchronizing means is a pair of meshing conical gears (35', 45).

## Patentansprüche

1. Vorrichtung zum Drehantrieb von zwei dicht beieinanderliegenden Wellen (31, 32) eines Doppelschneckenextruders mit
— wenigstens vier unabhängigen Triebeinheiten zum Antrieb der Wellen (31, 32),
— einem Zahnrad (34, 35) auf jeder Welle (31, 32), das von wenigstens zwei der Triebeinheiten angetrieben wird,
— einem Synchronisiermittel (34, 35, 30), das jedem der beiden angenäherten Wellen (31, 32) die gleiche Drehgeschwindigkeit in der einen oder anderen Richtung verleiht, dadurch gekennzeichnet, daß die Wellen (31, 32) konvergieren und auf jeder Welle das Antriebsrad (34, 35) kegelförmig ist.

2. Vorrichtung nach Anspruch 1, dadurch gekennzeichnet, daß die Triebeinheiten Planetenuntersetzungsgetriebe (23, 24) umfassen.

3. Vorrichtung nach Anspruch 1, dadurch gekennzeichnet, daß die Synchronisiermittel die ineinandereingreifenden Zahnräder (34, 35) sind.

4. Vorrichtung nach Anspruch 1, dadurch gekennzeichnet, daß die Antriebsrad (6) einer das Antriebsrad (3) antriebtenden Tiebeinheit in ein Leerlaufzahnrad (30) eingreift, das auch in das Antriebsrad (8) einer das andere Antriebsrad (4) betätigende Triebeinheit eingreift.

5. Vorrichtung zum Drehantrieb von zwei dicht beieinanderliegenden Wellen (31, 32) einer Doppelschneckenpresse mit
— wenigstens vier unabhängigen Triebeinheiten zum Antrieb der Wellen (31, 32),

— einem Zahnrad (43, 44) auf jeder Welle (31, 32), das von wenigstens zwei Triebeinheiten angetrieben wird,

— einem Synchronisiermittel (35', 45), das jedem der beiden angenäherten Wellen (31, 32) die gleich Drehgeschwindigkeit in der einen oder anderen Richtung verleiht, dadurch gekennzeichnet, daß die Wellen (31, 32) konvergieren und das auf jeder Welle befindliche Synchronisiermittel aus einem gekuppelten Stirnräderpaar (35', 45) besteht.

## Revendications

1. Mécanisme entraînant en rotation deux arbres (31, 32) rapprochés d'une extrudeuse à deux vis, comprenant:

— au moins quatre unités motrices indépendantes pour actionner lesdits arbres (31, 32);

— un engrenage entraîné (34, 35) sur chaque arbre (31, 32) qui est actionné par au moins deux desdites unités motrices;

— un moyen synchronisateur (34, 35, 30) pour imprimer à chacun des deux arbres rapprochés (31, 32) une rotation à la même vitesse, dans une direction ou dans l'autre; caractérisé en ce que les arbres (31, 32) sont convergents et que sur chacun d'eux l'engrenage moteur est conique (34, 35).

2. Mécanisme selon la revendication 1, caractérisé en ce que les unités motrices comprennent des réducteurs épicycloïdaux (23, 24).

3. Mécanisme selon la revendication 1, caractérisé en ce que les moyens synchronisateurs sont les engrenages (34, 35) eux-mêmes qui s'engrènent l'un dans l'autre.

4. Mécanisme selon la revendication 1, caractérisé en ce que l'engrenage moteur (6) d'une unité motrice actionnant l'engrenage entraîné (3) s'engrène dans un engrenage fou (30) qui s'engrène aussi dans l'engrenage moteur (8) d'une unité motrice actionnant l'autre engrenage entraîné (4).

5. Mécanisme actionnant en rotation deux arbres (31, 32) rapprochés d'une extrudeuse à double vis, comprenant:

— au moins quatre unités indépendantes pour actionner lesdits arbres (31, 32))

— un engrenage (43, 44) sur chaque arbre (31, 32) qui est actionné par au moins deux desdites unités motrices;

— un moyen synchronisateur (35', 45) pour imprimer à chacun des deux arbres rapprochés (31, 32) une rotation à la même vitesse, dans une direction ou dans l'autre; caractérisé en ce que les arbres (31, 32) son convergents et sur chacun d'entre eux le moyen synchronisateur consiste en une paire d'engrenages coniques couplés (35', 45).

FIG.1

FIG.2

FIG.3

FIG.4

38
32
34
37
35
31
36
39

FIG.5

48
44
45
32
31
35
43
47
40
46